# EUROPEAN PATENT SPECIFICATION

(11) **EP 3 998 204 B1**
(45) Date of publication and mention of the grant of the patent: **04.11.2026**
(21) Application number: 21158209.3
(22) Date of filing: 19.02.2021
(51) Int. Cl.: B64C 25/40

(54) **AIRCRAFT LANDING GEAR**
FLUGZEUGFAHRWERK
TRAIN D'ATTERRISSAGE D'AÉRONEF

(43) Date of publication of application: 18.05.2022
(73) Proprietor: Archer Aviation Inc., San Jose, CA 95134 (US)
(72) Inventor: OUTA, Ali, 82205 Gilching (DE); BRESCIANI, Luca Mario, 82131 Gauting (DE); BORN, Sebastian, 81541 München (DE); REICHMANN, Benjamin, 80689 München (DE); GUO, Wei, 81243 München (DE)
(74) Representative: Finnegan Europe LLP

(56) References cited:
- EP-A1- 3 495 264
- US-B2- 10 457 385
- US-B2- 9 233 752
- US-B2- 9 346 540
- US-B2- 9 884 678

## Description

The present invention refers to an aircraft landing gear, comprising a drive unit, preferably comprising an electric motor, and a transmission, which preferably comprises at least one gear, the aircraft landing gear furthermore comprising at least one wheel having a rim and the transmission is configured to transmit torque generated by the drive unit towards the wheel for driving the wheel of the aircraft landing gear, the rim has an axially extending rim section and the transmission and/or the drive unit is at least partially surrounded by the axially extending rim section.

Furthermore, US 10 457 385 B2 discloses an aircraft landing gear, comprising a drive unit, and a transmission, the aircraft landing gear furthermore comprising at least one wheel having a rim and the transmission is configured to transmit torque generated by the drive unit towards the wheel for driving the wheel of the aircraft landing gear, the rim has an axially extending rim section, and an elastic member is provided which is located at least partially between the drive unit and the wheel for transmitting torque of the drive unit towards the wheel

An aircraft landing gear of the aforementioned kind is, for example, known from EP 1 704 087 B1. The aircraft landing gear disclosed therein comprises a motor/generator, which is used either to decelerate the aircraft upon landing or to motorize the aircraft during taxiing. The aircraft landing gear disclosed in EP 1 704 087 B1 is intended to be an improvement over conventional braking systems. During landing and decelerating the aircraft, the system generates electricity which can later on be used to drive the wheels. Therefore, this system is very complex and bulky. Furthermore, large forces are introduced into the system during landing of the aircraft which require a very robust and a heavy built system. In particular for a smaller aircraft and for VTOL aircrafts, such aircraft landing gears are not suitable.

It is an object of the present invention to provide an aircraft landing gear which is compact and is suitable to be installed into smaller aircrafts.

The object is solved by an aircraft landing gear comprising the features of claim 1, in particular, wherein at least one elastic member is provided, which is located at least partially between the drive unit and the wheel, preferably between the transmission and the wheel, for transmitting torque of the drive unit towards the wheel.

With the aircraft landing gear according to the invention, the forces introduced into the transmission and to the drive unit during landing can be greatly reduced. In particular, shocks that might occur upon landing can be compensated. Also deflections, that might occur between the rim and the drive unit and transmission can be compensated. Tolerances of the drive unit and the transmission can also be compensated in order to avoid any tension in the aircraft landing gear. Due to the elastic member and the reduced forces induced on the transmission and the drive unit, both the drive unit and the transmission can be designed to be smaller and thus more compact. Due to this advantage, the aircraft landing gear is in particular suitable for smaller aircrafts such as electric personal aircraft. It is furthermore suitable for VTOL aircraft. Such aircraft take off and land vertically and any impact induced into the wheel and thus to the transmission or the drive unit upon landing can easily be compensated by the elastic member. Due to the elastic member, the drive unit and/or the transmission is protected. Regarding the transmission, it may comprise a single gear or a transmission gear box comprising individual transmission gears. The drive unit is preferably an electric motor. The drive unit may also comprise internal transmission gears in addition to the electric motor.

In a preferred embodiment, the elastic member can be a coupling member for coupling the drive unit and the transmission and/or the transmission and the rim. Such a coupling member allows a simple connection between the drive unit and the transmission and/or the transmission and the rim and allows to compensate for any shocks during landing induced onto the transmission and/or the drive unit.

The elastic member comprises at least one radially extending section, which engages an engagement section of the drive unit and the transmission respectively, or of the transmission and the wheel respectively, in a circumferential direction of the wheel, in order to transmit the torque generated by the motor towards the wheel. Such a design allows a very compact arrangement.

The design of the radially extending section to have the elastic member be installed under pretension between the motor and the transmission gear or the transmission gear and the wheel respectively in order to avoid any rattling. Due to the elastic member, a very smooth operation of the landing gear is possible.

The elastic member is preferably ring-shaped and comprises preferably several radially extending sections for engagement of corresponding engagement sections of the drive unit and the transmission gear or of the transmission gear and the wheel. The elastic member is essentially ring- shaped like a toothed gear, wherein the radially extending sections may be extending radially inward and/or radially outward. The elastic member can easily be installed or replaced and allows a reliable coupling between the drive unit and the transmission and/or the transmission and the wheel. Several elastic members may be provided, either adjacent to each other or at different locations, such as between the drive unit and the transmission and between the transmission and the wheel. They may also be located within the transmission itself, in case the transmission is a gear box with several individual gears.

By providing several radially extending sections, a rattle-free connection between the drive unit and the transmission or the transmission and the wheel can easily be attained.

In a preferred embodiment, the rim is rotatable supported by a support structure of the aircraft landing gear, and wherein the torque of the drive unit is transmitted through the transmission and the elastic member to the rim of the wheel. This allows for a very compact and a simple design. By supporting the rim on a support structure of the aircraft landing gear, the forces induced during landing can be directly introduced into the support structure and thereby diverted away from the transmission or the drive unit.

In order to obtain a very compact arrangement, the transmission is at least partially located adjacent to the drive unit in an axial direction of the rim. For example, the transmission can be a gear box, which is arranged adjacent to the drive unit along the axis of the wheel and next to each other. Thereby, the drive unit and the wheel can be surrounded by the rim, preferably fully surrounded by the rim in an axial direction. Thus, the drive unit and the transmission are encased within the rim in order to obtain a very compact arrangement.

Regarding the transmission, it is preferably that the transmission gear comprises a planetary gear. A planetary gear allows a high transmission ratio between the motor and the rim, as well as a very compact design. Rather high rpms of the motor can be converted into rather low rpms of higher torque at the wheel. Furthermore, planetary gear boxes are in particular suitable to control the rotating speed and the rotation direction of the wheel. In a further embodiment, the transmission can comprise two stages, meaning two consecutively arranged planetary gear sets, in order to obtain a higher transmission ratio. Other transmission arrangements, such as a common spur gear arrangement or a worm gear arrangement are feasible. Also, a harmonic drive can be used. A harmonic drive allows for a very high transmission created between the motor and the wheel. In particular for VTOL aircraft, the attainable ground speed does not need to be very high. Even a very small motor with high revolutions may be able to achieve the necessary speed of the wheel. The advantage would be a very compact design. However, for the present application, the planetary gear is advantageous, as it provides good relation between compactness and attainable rotational speed of the wheel.

In a preferred embodiment, the rim comprises a radially extending section, which is connected to the axially extending section, said axially extending section preferably supports at least one rolling member for rolling on the ground, said rolling member is preferably a tire. Due to this rim design, the transmission and the drive unit can be received within the rim and can be encased by the rim. The rim can carry also more than one tire in order to evenly distribute the load on the rim, for example, two tires next to each other in an axial direction. The tires can be directly adjacent, or there might be a certain axial distance between the tires in order to distribute the loads along the rim.

In an alternative embodiment, the rim may be tubular and the rim preferably supports at least one rolling member for rolling on the ground, the rolling member is preferably a tire. Again one or more tires are possible as outlined above. In case the rim is tubular, it may be supported directly on the support structure of the landing gear.

Preferably, the rim comprises two bearing sections, which are distant from each other in an axial direction of the rim, and of which at least one, preferably both are supported by the support structure. With the two bearing sections, the loads onto the rim can be evenly distributed and introduced into the support structure. Thereby it is possible to divert the loads away from the transmission and the drive unit. Furthermore, the stiffness of the rim can be greatly enhanced, thereby minimizing the deflection of the rim during landing. Thus, a gap between the motor and/or transmission and the axially extending section of the rim can be minimized and the landing gear can be made more compact. Such a design could also be operated without the elastic member. However, the elastic member will also further divert the loads upon landing away from the transmission and the drive unit and avoids any rattling.

It is an advantage, if the bearing sections are located at axial end sections of the rim, preferably within the last quarter of the axial length of the rim, more preferably at the ends of the rim, in order to have a beneficial load distribution upon landing.

In order to allow for a compact design, it is advantageous, if the transmission and/or the drive unit is at least partially located between the bearing sections of the rim in an axial direction.

In a preferred embodiment, the aircraft landing gear comprises an axle supported by the support structure, and that the radially extending section of the rim is supported on the axle. With this embodiment, it is possible to support the rim at one end on the axle and on the other end on the support structure. This allows a very compact design. The axle can be mounted to the support structure in a rotatable or non-rotatable manner.

In a further preferred embodiment, the aircraft landing gear comprises a brake between the drive unit and the transmission for braking the wheel, and which the brake is preferably at least partially located within the axially extending section of the rim. Again a very compact design is obtained. By locating the brake between the drive unit and the transmission, the braking force is amplified by the transmission. For additional compactness, the brake can also be located within the rotor of the motor. Thus, the brake is functionally located between the motor and the transmission but in a special arrangement, it is located within the rotor in the axial direction of the rim. Due to the location of the brake, the brake can be designed rather small and the overall size of the aircraft landing gear can be reduced. In particular, for VTOL aircraft, this location of the brake is advantageous. Such aircrafts do not land with high speeds and do not need to dissipate large amounts of energy in order to slow down.

In a further preferred embodiment, two wheels are provided, of which at least one of the wheels is driven by the drive unit in order to rotate in relation to the other wheel. With such an arrangement, it is possible to obtain very small turning radii of the landing gear. In particular during taxiing or parking, the enhanced control of the wheels of the aircraft is particularly benefitting. This arrangement comprising two wheels can be the nose gear of an aircraft having a tricycle landing gear.

Several aspects of the present invention can be used independently of the elastic member. In particular, the type of transmission, the shape of the rim and the location of the bearing sections of the rim, as well as the location of the brake and the possibility of having two wheels of which one wheel can rotate in relation to the other wheel. For these embodiments, the use of the elastic member is of great advantage, but not mandatory.

In the following, the invention is explained by the description of the embodiment and the drawings, wherein:
Fig. 1 is a cut-section of an aircraft landing gear according to the present invention;
Fig. 2 is a view of the support structure with the drive unit and the transmission gear but without the wheel;
Fig. 3 is a cross-section of the aircraft landing gear with two tires;
Fig. 4 is a cross-section of the landing gear with one tire;

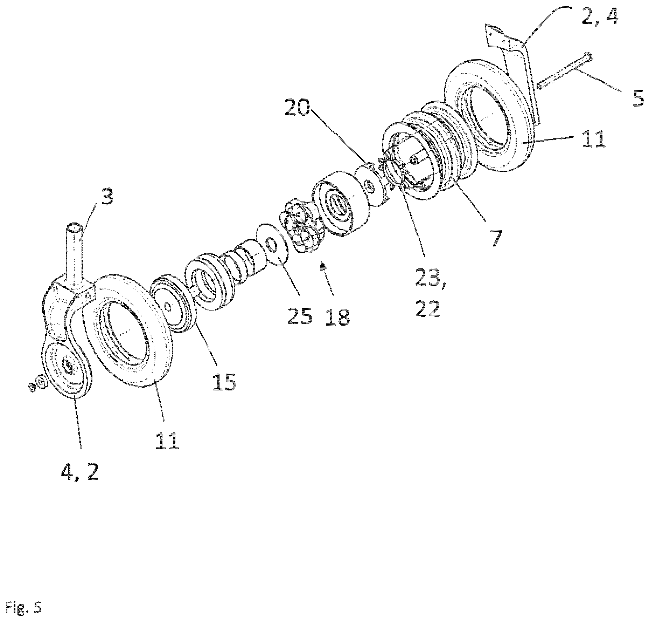

Fig. 5 is an exploded view of the aircraft landing gear according to the invention, and

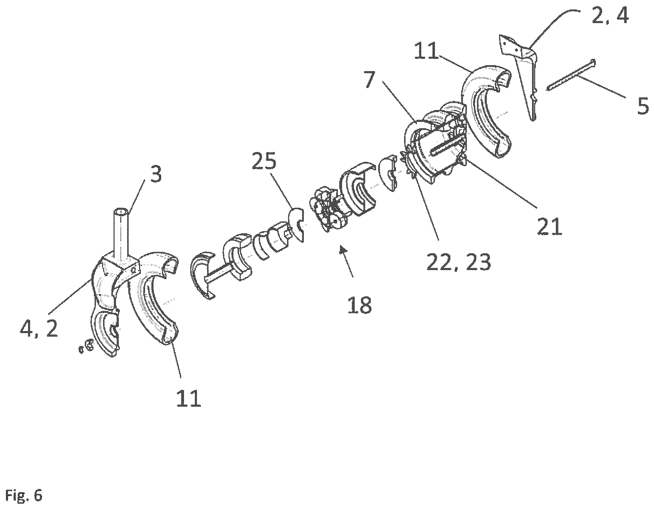

Fig. 6 is a cut-section of the exploded view of Fig. 5.

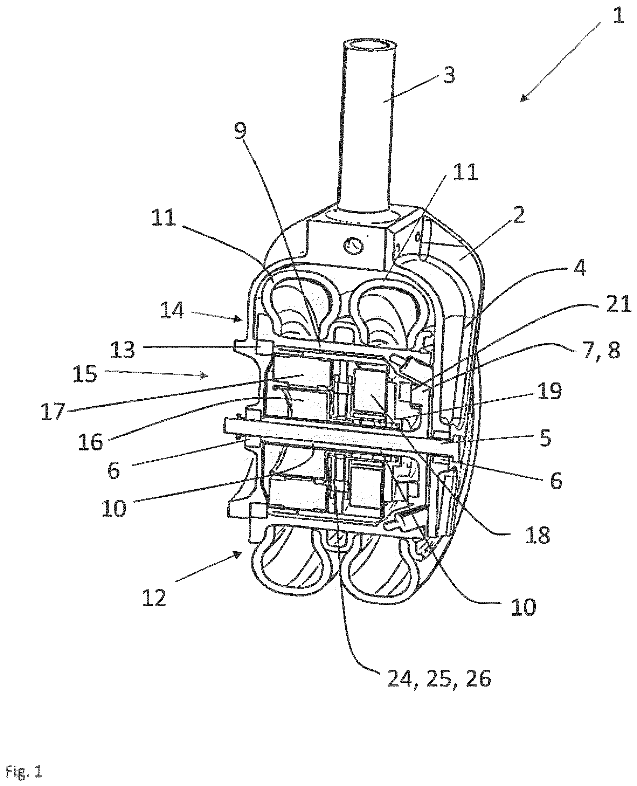

Fig. 1 shows the aircraft landing gear 1 in a cross-section. It comprises a support structure 2 with a mounting tube 3. The mounting tube 3 is intended to be mounted to the fuselage of an aircraft. The support structure 2 furthermore comprises a housing 4 which also serves as a fairing. An axle 5 extends rotatable through the housing and is supported within the housing by respective axle bearings 6.

On the axle 5, a rim 7 is mounted. The rim 7 comprises a radially extending section 8 and an axially extending section 9. It furthermore comprises a hub section 10, which also extends in an axial direction. The radially extending section 8, the axially extending section 9 and the hub section 10 are made as one piece. It might also be possible to have the rim formed by separate sections, which are joined by connecting elements or by a welding process or the like. In case it is made of one piece, it could be cast as one piece and machined thereafter in a known manner. The hub section 10 extends parallel to the radially extending section 8. The hub section is mounted to the axle and rotates therewith. It can be joined by a press-fit or by a common connecting technique between an axle and a cylindrical element, for example, by a serration connection.

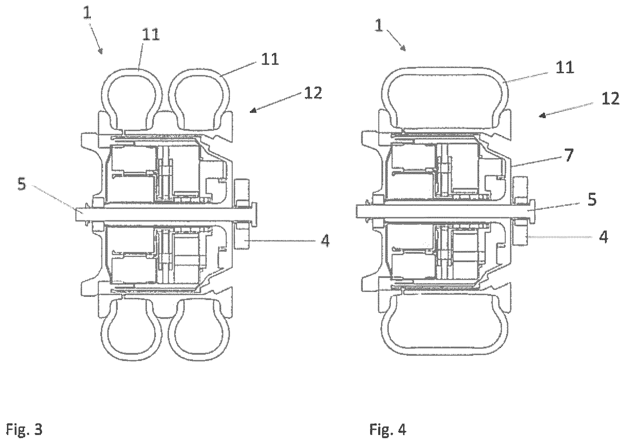

The rim 7 carries on the radially extending section 8 two tires 11 that are spaced apart and are mounted to the rim in a common manner. The rim 7 with the tires 11 forms a wheel. Fig. 4 shows an alternative configuration having only one, but wider tire 11.

The housing 4, which also serves as a fairing covers in a side view most of the rim 7 and the tires 11, such that only the lower most sections of the rim and the wheel are visible.

The rim 7 is supported by the axle 5 and is furthermore supported by a rim bearing 13. The rim bearing 13 supports the rim directly on the support structure in the area of the housing 4. This way, the rim is supported in two areas.

In order to evenly distribute the loads induced into the rim during landing, the rim bearing 13 is located in the axial end section 14 on the axial extending section 9 of the rim 7. The axial end section of the rim 14 is located opposite to the radially extending section 8 of the rim 7.

In an alternative second embodiment, which is not shown, the rim 7 is of a tubular shape and only comprises an axially extending section 9. This axially extending section 9 is supported on respective end sections 14 at opposite ends of the tubular shaped rim 7 and is supported by respective rim bearings 13 on the housing of the support structure. In this second embodiment, the radially extending section 8 and the hub section 10 are not necessary, as the rim is directly supported on a support structure only.

The aircraft landing gear 1 furthermore comprises a drive unit 15, which is formed by an electric motor. The electric motor 15 can be a DC or AC motor. Instead of an electric motor, it is also possible to provide other systems forming a drive unit for generating torque in order to drive the wheel. For example, a hydraulic drive system.

The electric motor comprises a rotor 16 and a stator 17. The stator 17 is directly connected to the housing. The rotor is connected in a common manner to a transmission 18, which is a planetary gear. Other types of gears are possible. The transmission forms a gear box comprising the planetary gear. The rotation of the rotor is transmitted to the transmission 18. The transmission 18 has a transmission output. The electric motor and the gear box form individual units which can be connected in a common manner.

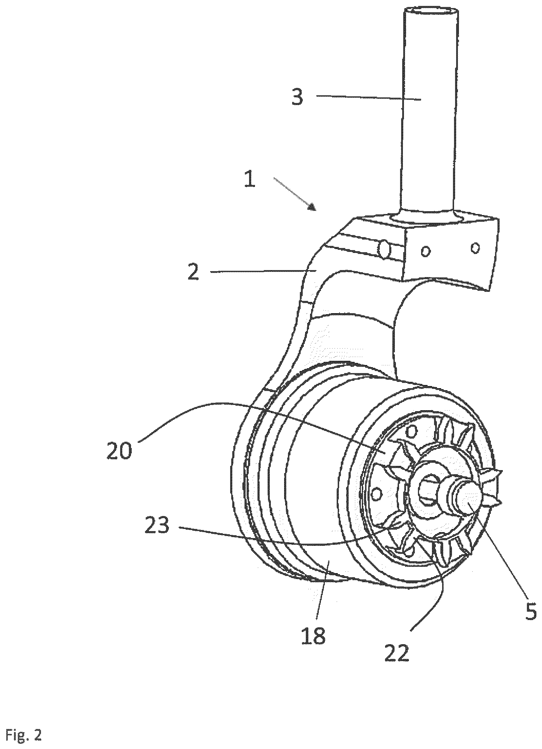

The transmission 18 also comprises a transmission output 19. The transmission output 19 has engagement sections which are formed by protrusions 20 and which are visible in Fig. 2. The radially extending section 8 of the rim has corresponding rim protrusions 21. The protrusions 20 of the transmission are directed axially towards the radially extending section of the rim, and the rim protrusions 21 are extending towards the transmission gear such that they overlap in a circumferential direction of the transmission.

Between the protrusions 20 and the rim protrusions 21, an elastic member 22 is located. The elastic member 22 is essentially ring-shaped and is provided with radially extending sections, which form engagement protrusions 23 along its circumference. The engagement protrusions 23 extend in a radial direction outwardly. In the assembled state of the landing gear, the engagement protrusions 23 are located between the protrusions 20 and the rim protrusions 21. The elastic member 22 is made from an elastic material, preferably a rubber or plastic material. Several materials are suitable for the elastic member 22. For example, plastic materials, i.e. Polyamide PA, and preferably a rubber composition made von natural or artificial materials is used. The engagement protrusions 23 are shaped and dimensioned in such a manner that in the assembled state of the landing gear, the engagement protrusions 23 are wedged between the protrusions 20 and the rim protrusions 21. The torque generated by the motor and transferred through the transmission will be transmitted to the rim through the engagement protrusions 23 of the elastic member. Due to the elastic member 22, any play between the protrusions 20 and the rim protrusions 21 can be eliminated and smooth operation of the landing gear is obtained.

In the alternative embodiment, wherein the rim is tubular-shaped, the protrusions 20 extend radially outward and the rim protrusions 21 are located on the inner wall of the tubular-shaped rim and extending inwardly. Again, the protrusions 20 and the rim protrusions 21 overlap in a circumferential direction. The elastic member 22 is shaped in such a way that the engagement protrusions 23 are located between the protrusions 20 and the rim protrusions 21. The elastic member 22 is for this purpose ring-shaped and the engagement protrusions 23 extend in an axial direction. The effect is similar to the first embodiment.

In order to obtain a very compact design, the motor and the transmission are received within the interior of the hub 7. This allows on the one hand a compact design and on the other hand easy assembly. Both the motor and the transmission can be supported by the hub section 10 of the rim. The hub section 10 may comprise hub bearings which allow relative movement of the hub against the motor and the transmission

The aircraft landing gear furthermore comprises a brake 24. The brake 24 comprises a brake disc 25 with a caliper 26. The use of a brake disc is a preferred embodiment which allows a very effective and compact brake. However, it would also be possible to use a drum brake or an electric brake.

The brake disc is located between the motor and the transmission. Operating the caliper 26 will act on the output of the motor, which is also the input of the transmission. This way, the braking force of the brake 24 is amplified by the transmission 18. A relatively small braking force can create a rather large braking force at the rim.

In a preferred embodiment, the brake is a mechanical brake which uses a wire connection for operation. The wire is not shown in the figure. Such a mechanical brake can be made very compact and very simple.

In the following, the function of the invention will be explained.

The aircraft landing gear 1 is mounted through the tube 3 to the fuselage on an airplane. Preferably, the landing gear according to the invention is a nose wheel of a tricycle landing gear. The landing gear will be attached to a preferably small aircraft such as a personal aircraft or aircrafts that can carry up to 10 people. It is preferably used in the field of VTOL aircrafts. Such aircrafts take off and land in a vertical manner. Thus, it is only exposed to loads induced during vertical take-off and landing. It does not have to withstand landing with high speeds or high take-off velocities. Due to the compactness of the design, it is particularly suitable for smaller aircrafts.

The landing gear 1 will be mounted through the tube 3 to the fuselage of the airplane. The tube 3 may be rotated about its axle for controlling the direction of the aircraft. There might furthermore be a suspension system with a spring between the tube 3 and the fuselage. The landing gear 1 may also be part of a retractable landing gear.

When operating the aircraft landing gear, a current is applied to the electric motor, which generates a torque that is transferred through the motor output and the transmission input into the transmission and through the elastic member to the rim of the wheel. Thereby it is possible to move the aircraft without the need of any external towing or pushing equipment. The aircraft can operate independently on airports and can, for example, taxi from a hanger to its starting position without the need of external assistance.

During landing, large forces are introduced into the landing gear. Due to the design according to the invention, the loads introduced into the tires are directly diverted into the housing by the rim bearing 13. This way loads during landing are diverted away from the motor and the transmission which are arranged within the rim of the wheel. Furthermore, the elastic member takes away the loads from the transmission and the motor. In the embodiment described above, one elastic member is located between the rim and the transmission. It would also be possible to have additional elastic members, for example, between the motor and the transmission. The elastic member is a very simple device in order to take away peak loads that might occur during landing. It can compensate any tolerances or alignment issues between the electric motor, the transmission and the rim. Moreover, it allows a very smooth operation of the aircraft landing gear. The elastic member can be replaced easily and lowers maintenance costs.

Specifically in the application of VTOL aircraft, no runway is needed for starting or landing. The brake installed in the aircraft landing gear according to the invention uses a very small brake of which the forces are amplified through the transmission. The brake is only used for short periods of time for stopping the aircraft from low speeds or keeping it in a parking position. The heat generated by the brake due to these operations is rather small and can easily be dissipated. The design according to the invention allows to create a very compact braking system for an aircraft landing gear, which is particularly suitable for VTOL aircrafts. The brake can be used independent of the elastic member.

### DESCRIPTION OF REFERENCE NUMERALS

- 1: aircraft landing gear.
- 2: support structure
- 3: mounting tube
- 4: housing fairing
- 5: axle
- 6: axle bearing
- 7: rim
- 8: radially extending section
- 9: axially extending section
- 10: hub section
- 11: tire
- 12: wheel
- 13: rim bearing
- 14: axial end section of rim
- 15: drive unit
- 16: rotor
- 17: stator
- 18: transmission
- 19: transmission output
- 20: protrusion
- 21: rim protrusions
- 22: elastic member
- 23: engagement protrusion
- 24: brake
- 25: brake disc
- 26: caliper

## Claims

1. Aircraft landing gear (1), comprising a drive unit, which preferably comprises an electric motor (15), and a transmission (18), which preferably comprises at least one gear, the aircraft landing gear furthermore comprising at least one wheel (12) having a rim (7), wherein the transmission (18) is configured to transmit torque generated by the drive unit (15) towards the wheel (12) for driving the wheel (12) of the aircraft landing gear, the rim (7) has an axially extending rim section (9), and the transmission (18) and/or the drive unit (15) is at least partially surrounded by the axially extending rim section (9), wherein at least one elastic member (22) is provided, which is located at least partially between the drive unit (15) and the wheel (12), preferably between the transmission (18) and the wheel (12), for transmitting torque of the drive unit (15) towards the wheel, wherein the elastic member (22) comprises at least one radially extending section, which engages an engagement section of the drive unit (15) and the transmission (18) respectively, or of the transmission (18) and the wheel (12) respectively, in a circumferential direction of the wheel, in order to transmit the torque generated by the drive unit (15) towards the wheel.

2. Aircraft landing gear (1) according to claim 1, **characterized in that** the elastic member (22) is a coupling member for coupling the drive unit (15) and the transmission (18) and/or the transmission (18) and the rim (7).

3. Aircraft landing gear according to at least one of the preceding claims, **characterized in that** the elastic member (22) is ring-shaped and comprises preferably several radially extending sections (8) for engagement of corresponding engagement sections of the drive unit (15) and the transmission (18) or of the transmission (18) and the wheel (12).

4. Aircraft landing gear according to at least one of the preceding claims, **characterized in that** the rim (7) is rotatable supported by a support structure (2) of the aircraft landing gear, and wherein the torque of the drive unit (15) is transmitted through the transmission (18) and the elastic member (22) to the rim of the wheel.

5. Aircraft landing gear according to at least one of the preceding claims, **characterized in that** the transmission (18) is at least partially located adjacent to the drive unit (15) in an axial direction of the rim.

6. Aircraft landing gear according to at least one of the preceding claims, **characterized in that** the transmission (18) comprises, preferably is, a planetary gear.

7. Aircraft landing gear according to at least one of the preceding claims, **characterized in that** the rim (7) comprises a radially extending section (8), which is connected to the axially extending section (9), said axially extending section preferably supports at least one rolling member for rolling on the ground, said rolling member is preferably a tire (11).

8. Aircraft landing gear according to at least one of claims 1 to 7, **characterized in that** the rim (7) is tubular, and **in that** the rim (7) preferably supports at least one rolling member for rolling on the ground, the rolling member is preferably a tire (11).

9. Aircraft landing gear according to claim 4 or claim 4 and at least one of claims 5 to 8, **characterized in that** the rim (7) comprises two bearing sections, which are distant from each other in an axial direction of the rim, and of which at least one, preferably both are supported by the support structure (2).

10. Aircraft landing gear according to claim 9, **characterized in that** the bearing sections are located at axial end sections of the rim (14), preferably within the last quarter of the axial length of the rim, more preferably at the ends of the rim.

11. Aircraft landing gear according to claim 9 or 10, **characterized in that** the transmission (18) and/or the drive unit (15) is at least partially located between the bearing sections of the rim in an axial direction.

12. Aircraft landing gear according to claim 4 or claim 4 and at least one of claims 5 to 11, **characterized in that** the aircraft landing gear comprises an axle (5) supported by the support structure (2), and that the radially extending section (8) of the rim is supported on the axle (5).

13. Aircraft landing gear according to at least one of the preceding claims, **characterized in that** it comprises a brake between the drive unit (15) and the transmission (18) for braking the wheel (12), and which brake is preferably at least partially located within the axially extending section (9) of the rim.

14. Aircraft landing gear according to at least one of the preceding claims, **characterized in that** two wheels are provided, of which at least one of the wheels is driven by the drive unit (15) in order to rotate in relation to the other wheel.

## Patentansprüche

1. Luftfahrzeugfahrwerk (1), umfassend eine Antriebseinheit, die bevorzugt einen Elektromotor (15) umfasst, und ein Getriebe (18), das vorzugsweise mindestens ein Zahnrad umfasst, wobei das Luftfahrzeugfahrwerk ferner mindestens ein Rad (12) mit einer Felge (7) umfasst,
wobei das Getriebe (18) dazu konfiguriert ist, ein durch die Antriebseinheit (15) erzeugtes Drehmoment auf das Rad (12) zum Antreiben des Rads (12) des Luftfahrzeugfahrwerks zu übertragen, die Felge (7) einen sich axial erstreckenden Felgenabschnitt (9) aufweist und das Getriebe (18) und/oder die Antriebseinheit (15) mindestens teilweise durch den sich axial erstreckenden Felgenabschnitt (9) umgeben ist,
wobei mindestens ein elastisches Element (22) bereitgestellt ist, das sich mindestens teilweise zwischen der Antriebseinheit (15) und dem Rad (12), bevorzugt zwischen dem Getriebe (18) und dem Rad (12), befindet, um ein Drehmoment der Antriebseinheit (15) auf das Rad zu übertragen, wobei das elastische Element (22) mindestens einen sich radial erstreckenden Abschnitt umfasst, der mit einem Eingriffsabschnitt der Antriebseinheit (15) beziehungsweise des Getriebes (18) oder des Getriebes (18) beziehungsweise des Rades (12) in einer Umfangsrichtung des Rades in Eingriff gelangt, um das durch die Antriebseinheit (15) erzeugte Drehmoment auf das Rad zu übertragen.

2. Luftfahrzeugfahrwerk (1) nach Anspruch 1, **dadurch gekennzeichnet, dass** das elastische Element (22) ein Kopplungselement zum Koppeln der Antriebseinheit (15) und des Getriebes (18) und/oder des Getriebes (18) und der Felge (7) ist.

3. Luftfahrzeugfahrwerk nach mindestens einem der vorhergehenden Ansprüche, **dadurch gekennzeichnet, dass** das elastische Element (22) ringförmig ist und bevorzugt mehrere sich radial erstreckende Abschnitte (8) zum Eingriff entsprechender Eingriffsabschnitte der Antriebseinheit (15) und des Getriebes (18) oder des Getriebes (18) und des Rades (12) umfasst.

4. Luftfahrzeugfahrwerk nach mindestens einem der vorhergehenden Ansprüche, **dadurch gekennzeichnet, dass** die Felge (7) drehbar durch eine Stützstruktur (2) des Luftfahrzeugfahrwerks gestützt ist und wobei das Drehmoment der Antriebseinheit (15) durch das Getriebe (18) und das elastische Element (22) auf die Felge des Rads übertragen wird.

5. Luftfahrzeugfahrwerk nach mindestens einem der vorhergehenden Ansprüche, **dadurch gekennzeichnet, dass** sich das Getriebe (18) mindestens teilweise benachbart zu der Antriebseinheit (15) in einer axialen Richtung der Felge befindet.

6. Luftfahrzeugfahrwerk nach mindestens einem der vorhergehenden Ansprüche, **dadurch gekennzeichnet, dass** das Getriebe (18) ein Planetengetriebe umfasst, bevorzugt ist.

7. Luftfahrzeugfahrwerk nach mindestens einem der vorhergehenden Ansprüche, **dadurch gekennzeichnet, dass** die Felge (7) einen sich radial erstreckenden Abschnitt (8) umfasst, der mit dem sich axial erstreckenden Abschnitt (9) verbunden ist, wobei der sich axial erstreckende Abschnitt bevorzugt mindestens ein Rollelement zum Rollen auf dem Boden stützt, wobei das Rollelement vorzugsweise ein Reifen (11) ist.

8. Luftfahrzeugfahrwerk nach mindestens einem der Ansprüche 1 bis 7, **dadurch gekennzeichnet, dass** die Felge (7) rohrförmig ist und dass die Felge (7) bevorzugt mindestens ein Rollelement zum Rollen auf dem Boden stützt, wobei das Rollelement bevorzugt ein Reifen (11) ist.

9. Luftfahrzeugfahrwerk nach Anspruch 4 oder Anspruch 4 und mindestens einem der Ansprüche 5 bis 8, **dadurch gekennzeichnet, dass** die Felge (7) zwei Lagerabschnitte umfasst, die in einer axialen Richtung der Felge voneinander beabstandet sind und von denen mindestens einer, bevorzugt beide durch die Stützstruktur (2) gestützt sind.

10. Luftfahrzeugfahrwerk nach Anspruch 9, **dadurch gekennzeichnet, dass** sich die Lagerabschnitte an axialen Endabschnitten der Felge (14) befinden, bevorzugt innerhalb des letzten Viertels der axialen Länge der Felge, stärker bevorzugt an den Enden der Felge.

11. Luftfahrzeugfahrwerk nach Anspruch 9 oder 10, **dadurch gekennzeichnet, dass** sich das Getriebe (18) und/oder die Antriebseinheit (15) mindestens teilweise zwischen den Lagerabschnitten der Felge in einer axialen Richtung befindet.

12. Luftfahrzeugfahrwerk nach Anspruch 4 oder Anspruch 4 und mindestens einem der Ansprüche 5 bis 11, **dadurch gekennzeichnet, dass** das Luftfahrzeugfahrwerk eine Achse (5) umfasst, die durch die Stützstruktur (2) gestützt ist, und dass der sich radial erstreckende Abschnitt (8) der Felge auf der Achse (5) gestützt ist.

13. Luftfahrzeugfahrwerk nach mindestens einem der vorhergehenden Ansprüche, **dadurch gekennzeichnet, dass** es eine Bremse zwischen der Antriebseinheit (15) und dem Getriebe (18) zum Bremsen des Rads (12) umfasst und wobei sich die Bremse bevorzugt mindestens teilweise innerhalb des sich axial erstreckenden Abschnitts (9) der Felge befindet.

14. Luftfahrzeugfahrwerk nach mindestens einem der vorhergehenden Ansprüche, **dadurch gekennzeichnet, dass** zwei Räder bereitgestellt sind, von denen mindestens eines der Räder durch die Antriebseinheit (15) angetrieben wird, um sich relativ zu dem anderen Rad zu drehen.

## Revendications

1. Train d'atterrissage d'aéronef (1), comprenant une unité d'entraînement, qui comprend de préférence un moteur électrique (15), et une transmission (18), qui comprend de préférence au moins un engrenage, le train d'atterrissage d'aéronef comprenant en outre au moins une roue (12) ayant une jante (7),
dans lequel la transmission (18) est conçue pour transmettre le couple généré par l'unité d'entraînement (15) vers la roue (12) pour entraîner la roue (12) du train d'atterrissage d'aéronef, la jante (7) a une section de jante s'étendant axialement (9), et la transmission (18) et/ou l'unité d'entraînement (15) est au moins partiellement entourée par la section de jante s'étendant axialement (9),
dans lequel au moins un élément élastique (22) est prévu, lequel est situé au moins partiellement entre l'unité d'entraînement (15) et la roue (12), de préférence entre la transmission (18) et la roue (12), pour transmettre le couple de l'unité d'entraînement (15) vers la roue,
dans lequel l'élément élastique (22) comprend au moins une section s'étendant radialement, qui engage une section d'engagement de l'unité d'entraînement (15) et de la transmission (18) respectivement, ou de la transmission (18) et de la roue (12) respectivement, dans une direction circonférentielle de la roue, afin de transmettre le couple généré par l'unité d'entraînement (15) vers la roue.

2. Train d'atterrissage d'aéronef (1) selon la revendication 1, **caractérisé en ce que** l'élément élastique (22) est un élément de couplage pour coupler l'unité d'entraînement (15) et la transmission (18) et/ou la transmission (18) et la jante (7).

3. Train d'atterrissage d'aéronef selon au moins l'une des revendications précédentes, **caractérisé en ce que** l'élément élastique (22) est en forme d'anneau et comprend de préférence plusieurs sections s'étendant radialement (8) pour l'engagement des sections d'engagement correspondantes de l'unité d'entraînement (15) et de la transmission (18) ou de la transmission (18) et de la roue (12).

4. Train d'atterrissage d'aéronef selon au moins l'une des revendications précédentes, **caractérisé en ce que** la jante (7) est supportée de manière rotative par une structure de support (2) du train d'atterrissage d'aéronef, et dans lequel le couple de l'unité d'entraînement (15) est transmis par l'intermédiaire de la transmission (18) et de l'élément élastique (22) à la jante de la roue.

5. Train d'atterrissage d'aéronef selon au moins l'une des revendications précédentes, **caractérisé en ce que** la transmission (18) est au moins partiellement située adjacente à l'unité d'entraînement (15) dans une direction axiale de la jante.

6. Train d'atterrissage d'aéronef selon au moins l'une des revendications précédentes, **caractérisé en ce que** la transmission (18) comprend, de préférence, un engrenage planétaire.

7. Train d'atterrissage d'aéronef selon au moins l'une des revendications précédentes, **caractérisé en ce que** la jante (7) comprend une section s'étendant radialement (8), qui est raccordée à la section s'étendant axialement (9), ladite section s'étendant axialement supporte de préférence au moins un élément de roulement pour rouler sur le sol, ledit élément de roulement est de préférence un pneu (11).

8. Train d'atterrissage d'aéronef selon au moins l'une des revendications 1 à 7, **caractérisé en ce que** la jante (7) est tubulaire, et **en ce que** la jante (7) supporte de préférence au moins un élément de roulement pour rouler sur le sol, l'élément de roulement est de préférence un pneu (11).

9. Train d'atterrissage d'aéronef selon la revendication 4 ou la revendication 4 et au moins l'une des revendications 5 à 8, **caractérisé en ce que** la jante (7) comprend deux sections de palier, qui sont distantes l'une de l'autre dans une direction axiale de la jante, et dont au moins l'une, de préférence les deux, sont supportées par la structure de support (2).

10. Train d'atterrissage d'aéronef selon la revendication 9, **caractérisé en ce que** les sections de palier sont situées au niveau des sections d'extrémité axiale de la jante (14), de préférence dans le dernier quart de la longueur axiale de la jante, plus préférablement aux extrémités de la jante.

11. Train d'atterrissage d'aéronef selon la revendication 9 ou 10, **caractérisé en ce que** la transmission (18) et/ou l'unité d'entraînement (15) est au moins partiellement située entre les sections de palier de la jante dans une direction axiale.

12. Train d'atterrissage d'aéronef selon la revendication 4 ou la revendication 4 et au moins l'une des revendications 5 à 11, **caractérisé en ce que** le train d'atterrissage d'aéronef comprend un essieu (5) supporté par la structure de support (2), et **en ce que** la section s'étendant radialement (8) de la jante est supportée sur l'essieu (5).

13. Train d'atterrissage d'aéronef selon au moins l'une des revendications précédentes, **caractérisé en ce qu'**il comprend un frein entre l'unité d'entraînement (15) et la transmission (18) pour freiner la roue (12), et lequel frein est de préférence au moins partiellement situé à l'intérieur de la section s'étendant axialement (9) de la jante.

14. Train d'atterrissage d'aéronef selon au moins l'une des revendications précédentes, **caractérisé en ce que** deux roues sont prévues, dont au moins une des roues est entraînée par l'unité d'entraînement (15) afin de tourner par rapport à l'autre roue.
